Europäisches Patentamt

European Patent Office

Office européen des brevets

(19)

(11) **EP 1 530 140 A2**

(12) **EUROPÄISCHE PATENTANMELDUNG**

(43) Veröffentlichungstag:
**11.05.2005 Patentblatt 2005/19**

(51) Int Cl.⁷: **G06F 17/60**

(21) Anmeldenummer: **04012860.5**

(22) Anmeldetag: **01.06.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **07.11.2003  DE 10352085**

(71) Anmelder: **Deutsche Telekom AG**
**53113 Bonn (DE)**

(72) Erfinder:
• **Daussmann, Frank**
  **67454 Hassloch (DE)**
• **Trinkel, Marian, Dipl.-Ing.**
  **52372 Kreuzau OT Untermaubach (DE)**

(54) **Computer basiertes Verfahren und System zur automatisierten Geschäftsabwicklung**

(57)  Die Erfindung betrifft eine automatisierte Geschäftsabwicklung. Eine Aufgabe der Erfindung besteht darin, einen Computer basierten weg aufzuzeigen, um über ein Kommunikationsportal für Dienstanbieter eine Plattform für eine automatische Geschäftsabwicklung bereitzustellen.

Die erfindungsgemäße Lösung schlägt zur automatisierten Geschäftsabwicklung ein Computer basiertes System und Verfahren vor, welches unter Verwendung eines multifunktionalen Kommunikationsportals, auf welches über wenigstens ein Kommunikationsmedium zugegriffen werden kann, und welches mit wenigstens einer Datenbank zum Speichern einer Vielzahl von über das Kommunikationsportal präsentierbaren Diensten zuordenbaren Parametern zusammenwirkt und, welches unter Ansprechen auf eine durch einen Benutzer über ein Kommunikationsmedium an das Kommunikationsportal übermittelte Dienstanfrage Benutzerbezogene Parameter erfasst und unter Verknüpfung der Dienstanfrage und erfasster Benutzerbezogener Parameter automatisch ein individuelles Dienstangebot aus der Vielzahl der über das Kommunikationsportal präsentierbaren Diensten zuordenbaren Parametern für den Benutzer zur Annahme erstellt, wobei bis zur vollständigen Beendigung einer Geschäftsabwicklung alle notwendigen Vorgänge gesichert protokolliert werden.

Fig. 1

EP 1 530 140 A2

## Beschreibung

Die Erfindung betrifft ein Computer basiertes Verfahren zur automatisierten Geschäftsabwicklung unter Verwendung eines multifunktionalen Kommunikationsportals sowie ein zur Durchführung des erfindungsgemäßen Verfahrens entsprechend angepasstes System.

Kommunikationsportale, über welche bestimmte Dienste abgerufen werden können, sind aus dem Stand der Technik bekannt. Derartige Portale können beispielsweise reine Sprachzugänge aufweisen und sind Herkömmlicherweise einem öffentlichen Fernsprechnetz zugeordnet. Zu nennen sind hier insbesondere Kommunikationsportale, die beispielsweise unter den anwählbaren Servicerufnummern 0190xx oder 0180xx jeweils einen bestimmten Dienst Benutzern zur Verfügung stellen.

Die Abrechnung der hierüber abgerufenen Dienste erfolgt ferner üblicherweise durch eine entsprechende voreingestellte Tariffierung der Kommunikationsverbindung bei Wahl solcher Servicerufnummern.

Darüber hinaus sind Kommunikationsportale bekannt, welche über das Internet zugänglich sind. Hierbei hat ein Benutzer häufig die Möglichkeit, nach Zugriff auf das Kommunikationsportale zwischen verschiedenen angebotenen Diensten einen oder mehrere auszuwählen. Die Abrechnung des Dienstes erfolgt zum Beispiel unter Eingabe einer Kreditkartennummer oder unter Eingabe einer Bankverbindung und Erteilung einer Lastschrifteinzugsgenehmigung oder auch per Nachnahme bei Zustellung des erwünschten Dienstes.

Auch hierbei wird jedoch Herkömmlicherweise lediglich die Wahl zwischen Diensten, welche durch jeweils einen Anbieter vorher fest definiert wurden, ermöglicht. Solche Dienste können beispielsweise Flugreisen und/oder Pauschalangebote von Touristikveranstaltern umfassen oder aus einem von einem entsprechenden Anbieter umworbenen, online präsentierten Bestellkatalog wählbare Waren sein.

Hinsichtlich der nachfolgenden Beschreibung sowie der Ansprüche sei folglich darauf hingewiesen, dass der Begriff "Dienst" nicht nur Dienstleistungen sondern auch Waren im Wesentlichen jeder Art umfasst.

Ferner sind Kommunikationsportale bekannt, über welche von unterschiedlichen Anbietern vordefinierte Dienste im Wesen einer Versteigerungsplattform entsprechend präsentiert werden, so dass die dem Dienst zugeordnete Gegenleistung der Entgeltung durch einen jeweiligen Benutzer zumindest mit beeinflussbar ist.

Computer basierte Systeme, die unter Bereitstellung eines Kommunikationsportals hingegen eine Präsentationsplattform anbieten, über welche eine Vielzahl unterschiedlicher Dienstanbieter unter gemeinsamer Nutzung der Präsentationsplattform ihre Dienste derart präsentieren können, dass quasi in Form eines virtuellen Basars die Möglichkeit gegeben wird, zwischen einem Benutzer und einem oder mehren Dienstanbietern aus der Vielzahl von unterschiedlichsten Diensten nach Maßgabe von Nachfrage und Angebot die Abwicklung eines jeweils individuellen Dienstes zu betreiben, sind nicht bekannt. Bisher müssen hierfür Dienstanbieter daher eigene Plattformen bereitstellen, wodurch insbesondere bei kleineren Dienstanbieter, wie beispielsweise Musiker und Komponisten, in Bezug auf den jeweils angebotenen Dienst viel Zeit und somit auch Geld in die Bereitstellung der entsprechenden Technik verbraucht wird. So müssen beispielsweise eigene Webseiten erstellt, installiert und gewartet werden.

Ergänzend oder alternativ müssen ferner neben Werbung und Auftragseinholung weitere Systeme, beispielsweise zur Bearbeitung und Verwaltung von Auftragsabwicklungen bereitgestellt werden. Auf das Kerngeschäft selbst, welches beispielsweise eine Nebentätigkeit ist, kann sich somit insbesondere ein Kleinstunternehmer oder auch eine sogenannte Ich-AG kaum mehr konzentrieren, da die meiste Zeit durch die Bereitstellung der jeweiligen Technikumgebung verbraucht wird.

Mit anderen Worten führt die individuelle Bereitstellung einer Technikumgebung, insbesondere bei kleinen Dienstanbietern zu einem hohen manuellen und technischen Aufwand, wobei häufig zusätzlich eine eigene Auftrags-Geschäftsoftware nötig ist und ein (Verwaltungs-)Aufwand zu Buche schlägt, der den Wert der Dienstleistung und/oder die Produktionskosten teilweise erheblich übersteigt. Auch eine auf die Bedürfnisse eines Kunden abgestellte Koordinierung verschiedener Dienste von unterschiedlichen Dienstanbietern ist somit nur bedingt oder mit erheblichem, auch technischem Aufwand gewährleistbar.

Eine Aufgabe der Erfindung besteht somit darin, einen Computer basierten Weg aufzuzeigen, um über ein Kommunikationsportal für Dienstanbieter eine Plattform für eine automatische Geschäftsabwicklung bereitzustellen. Bevorzugt ist somit angestrebt unter Verwendung modaler Medien und modaler Zugänge sowie unter Gewährleistung einer kundenfreundlichen, jedoch für beide Seiten sicheren Geschäftsabwicklung, eine technisch einfache und kostengünstige Abwicklung eines Geschäftes, beginnend von der Anfrage über Angebote und der Erteilung eines Auftrages bis vorzugsweise hin zur Abrechnung bereitzustellen.

Die erfindungsgemäße Lösung der Aufgabe ist auf überraschende Weise bereits durch ein Verfahren und durch ein System mit den Merkmalen der unabhängigen Ansprüche gegeben.

Vorteilhafte und/oder bevorzugte Ausführungsformen und Weiterbildungen sind Gegenstand der jeweiligen Unteransprüche.

Erfindungsgemäß ist somit zur automatisierten Geschäftsabwicklung unter Verwendung wenigstens eines multifunktionalen Kommunikationsportals, auf welches über wenigstens ein frei wählbares Kommunikationsmedium zugegriffen werden kann und welches mit wenigstens einer Datenbank zum Speichern einer Vielzahl von über das Kommunikationsportal präsentierbaren Diensten zuordenbaren Parametern zusammenwirkt, die Erstellung wenigstens eines individuellen Dienstangebotes aus der Vielzahl der über das Kommunikationsportal präsentierbaren Diensten zuordenbaren Parametern für einen Benutzer vorgesehen, und zwar erst unter Ansprechen auf eine durch den Benutzer über ein Kommunikationsmedium an das Kommunikationsportal übermittelte Dienstanfrage, infolge welcher bereits benutzerbezogene Parameter erfasst werden. Die Dienstanfrage und erfasste benutzerbezogene Parameter werden zur Erstellung des individuellen Dienstangebotes miteinander verknüpft und bilden somit die Basis für die Erstellung eines individuellen Angebots. Durch die weitere erfindungsgemäße gesicherte Protokollierung aller bis zur vollständigen Beendigung einer Geschäftsabwicklung notwendigen Vorgänge ist gewährleistet, dass das Dienstangebot unlöschbar für multi-modale Kommunikationsgeräte die Anfrage beinhaltet und folglich eine für alle bei der Geschäftsabwicklung Beteiligten dauerhaft nachvollziehbare Funktion von über das Kommunikationsportal präsentierbaren Diensten zugeordneten Parametern und einer individuellen Benutzeranfrage darstellt.

Zur Durchführung eines solchen erfindungsgemäßen Verfahrens umfasst ein erfindungsgemäßes Computer basiertes System zweckmäßigerweise zumindest eine Vorrichtung zum Empfangen von durch einen Benutzer über ein Kommunikationsmedium an das Kommunikationsportal übersandten Dienstanfragen, eine mit der Empfangsvorrichtung zusammenwirkende Vorrichtung zum Erfassen von benutzerbezogenen Parametern sowie eine Vorrichtung, die durch Zusammenwirken mit der Datenbank, der Empfangsvorrichtung und der Erfassungsvorrichtung durch Verknüpfung der Dienstanfrage, benutzerbezogener Parameter und im Vorfeld gespeicherter, über das Kommunikationsportal präsentierbaren Diensten zuordenbaren Parametern die Erstellung wenigstens eines individuellen Dienstangebotes automatisch durchführt und eine Vorrichtung zur gesicherten Protokollierung aller notwendigen Vorgänge bis zur vollständigen Beendigung einer Geschäftsabwicklung.

Wesentliche Vorteile der Erfindung bestehen somit darin, dass die im Wesentlichen vollständige Abwicklung eines individuellen Dienstes von einem Erstkontakt über einen Auftrag, die Kommunikation und der Abschluss automatisiert über das Kommunikationsportal durchgeführt wird, wobei durch die gesicherte, modale Protokollierung jegliche während der Abwicklung durchgeführte Kommunikation und/oder erstellte Dokumente für eine weitere Verwendung konserviert bzw. geschützt ist. Die Zuordnung erfolgt automatisch und umfasst in zweckmäßiger Weise die eindeutigen individuellen Netzkennungen von jeweils verwendeten Kommunikationsendeinrichtungen und/oder -systemen, insbesondere der auf Kundenseite anzusiedelnden Benutzer und den jeweiligen Dienstanbietern. Technisch sind im Wesentlichen alle vorhandenen und/oder zukünftigen Kommunikationsmedien und/oder -strukturen verwendenbar bzw. einsetzbar.

Bevorzugte, insbesondere interaktive Dialogwege gewährleistende erfindungsgemäße Ausführungsformen umfassen folglich multimediale Kommunikationsschnittstellen, -medien und/oder -strukturen, so dass die Nutzung insbesondere von Spracherkennungssystemen, SMS-basierten Systemen, interaktiven Dialogsystemen, Browsertechnologien, Bilderkennungssystemen, Fax-, Telefon- oder Brief-basierten Medienzugängen, Voice-over-Internet-Technologien und/oder intelligenten Netzen gewährleistet ist. Eindeutige individuelle Netzkennungen umfassen somit anwendungsspezifisch insbesondere Rufnummern oder Rufleitungsidentifikatoren (CLI), IP-Adressen und/oder Daten eines einer Kommunikationsendeinrichtung zugewiesenen HLRs (Heimatortregister) .

Zur Verwaltung der über das Kommunikationsportal zu präsentierenden Dienste und/oder der Erstellung individueller Dienstangebote können anwendungsspezifisch bereits entwickelte Content-Management-Systeme innerhalb des erfindungsgemäßen Systems eingesetzt werden und zur eigentlichen Präsentierung der Dienste kann anwendungsspezifisch auf entsprechende Audio- und/oder visuelle Techniken zurückgegriffen werden.

Vorzugsweise wird bei jedem Zugriff auf das Kommunikationsportal, sei es von Seiten eines Benutzers oder von Seiten eines Dienstanbieters, eine Authentifikation des Zugreifenden durchgeführt, so dass stets eine vor Manipulation gesicherte Erfassung/Aktualisierung von entsprechenden der Vielzahl von Diensten zuordenbaren Parametern, einschließlich von Dientsanbieterprofilen, und von benutzerbezogenen Parametern auf einfachste Weise gewährleistet ist. Darüber hinaus ist zur Zuordnung aller durch die Geschäftsabwicklung betroffenen Beteiligten und/oder aller bei der Abwicklung eines Dienstes notwendigen Ressourcen zweckmäßigerweise eine automatische Speicherung und/oder gesicherte Protokollierung der jeweiligen eindeutigen individuellen Netzkennungen von vorgegebenen und/oder beim Zugriff auf das Kommunikationsportal eingesetzten Kommunikationsendeinrichtungen als derartige Parameter vorgesehen.

In weiterer besonders zweckmäßiger Fortführung der Erfindung ist ein Abrechnungsmodul derart durch Schnittstellen eingebunden, dass unter Ansprechen auf eine an das Kommunikationsportal übermittelte Annahme eines individuell erstellten Dienstangebotes durch einen Benutzer automatisch ein finanztechnischer Buchungstransfer mit entsprechenden Kommunikationssystemen und/oder -endeinrichtungen aller durch die Geschäftsabwicklung betroffenen Beteiligten eingeleitet und/oder durchgeführt wird. Zweckmäßigerweise werden auch hierbei jeweils gespeicherte und/oder erfasste eindeutige individuelle Netzkennungen verwendet.

Insbesondere wird hierbei in bevorzugter und für den Dienstanbieter zweckmäßiger Weise eine Abrechnungsaufsplittung durch das Finanzmodul derart vorgenommen, dass zum einen eine Abrechnung gegenüber dem kundenseitigen Benutzer erfolgt, und auf der anderen Seite eine entsprechende positive Verbuchung auf Seiten des Anbieters bei gleichzeitiger Abführung, d.h. entsprechender Weiterleitung oder Weiterbuchung von "sogenannten Dienstnebenkosten", wie beispielsweise der Mehrwertsteuer oder von der GEMA (Gesellschaft für musikalische Aufführungen und mechanische Vervielfältigungsrechte) zuzuordnenden Gebühren. Hierzu enthalten die den präsentierbaren Diensten zuordenbaren Parameter entsprechende Angaben über bei der Abwicklung eines jeweiligen Geschäfts betroffene und/ oder beteiligte Dritte.

In weiterer erfindungsgemäßer Fortführung wirken die einzelnen Speicher-, Erfassungs-, Verknüpfungs- und Kommunikationsvorrichtungen bzw. -module derart zusammen, dass bei Annahme eines individuell erstellten Dienstangebotes durch einen Benutzer automatisch ein, wiederum zweckmäßigerweise vom System protokollierter, Aufnahmebestätigungstransfer und/oder Dienstbuchungstransfer über jeweilige Kommunikationssystemen und/oder -endeinrichtungen aller bei der Abwicklung des Geschäftsvorgangs notwendigen Ressourcen eingeleitet und/oder durchgeführt wird, so dass also in Folge auch den Anbietern von zu einem gemeinsamen Dienstangebot verknüpften Diensten der Abschluss und die hierfür notwendige Ressourcen-Koordinierung und -Buchung untereinander entsprechend angezeigt wird.

Erfindungsgemäß ist ferner vorgesehen, dass Ansprechen auf eine Änderungsfrage durch einen Benutzer in Bezug auf ein erstelltes Dienstangebot die Erstellung eines neues individuellen Dienstangebot oder eine Anpassung des bereits erstellten Dienstangebotes durch erneuten Abgleich und entsprechender Verknüpfung gespeicherter Parameter eingeleitet wird. Das Erstellen eines erneuten individuellen Dienstangebotes und/oder das Anpassen eines Dienstangebotes erfolgt somit wiederum unter Verknüpfung von einer Vielzahl von Diensten basierend auf den jeweiligen Diensten zuordenbaren Parametern und in Abhängigkeit der Änderungsanfrage sowie Benutzerbezogenen Parameter.

Dem Anbieter eines jeweiligen Dienstes wird ferner applikationsspezifisch die Möglichkeit der Vorgabe vielfältigster Rahmenbedingungen gegeben. Diese Rahmenbedingungen, die den über das Kommunikationsportal präsentierbaren Diensten als Parameter spezifisch zugeordnet und in der wenigstens einen Datenbank entsprechend gespeichert werden, umfassen somit insbesondere Informationen über den Dienstanbieter, angebotene Fähigkeiten, weitere benötigte Ressourcen, Termin- und/oder Preisvorgaben und/oder Preisspannen, finanztechnische Informationen, insbesondere über Abrechnungsmodalitäten und/oder beteiligte Finanzbehörden, Netzkennungen von für einen Datentransfer vor, während und/oder nach einer Geschäftsabwicklung einzubeziehenden Kommunikationssysteme und vieles mehr.

Durch Bereitstellung entsprechender Schnittstellen und Zusammenfassung unterschiedlichster modaler Medien wie Text, Ton, Bild erfolgen die für eine Geschäftsabwicklung notwendigen Vorgänge unter Einsatz einer Vielzahl von Kommunikationsmedien und können beispielsweise auch nach Unterbrechung einer Geschäftsabwicklungssitzung und Neu-/Wiederaufnahme einer Geschäftsabwicklungssitzung durch Zugreifen auf das Kommunikationsportal über ein anderes Kommunikationsmedium ohne Dokumentationsabbruch durch jeweilige entsprechende Konvertierung auf ein aktuell verwendetes Kommunikationsmedium fortgesetzt werden, wobei durch die gesicherte Protokollierung jeder Schritt innerhalb einer Geschäftsabwicklungssitzung eingefroren und nicht manipulierbar ist. In Folge ist somit die gegebenenfalls auch unterbrochene Geschäftsabwicklung als Ganzes in einer homogenen Dokumentation ohne Medienbruch oder unter Anwendung einer zur homogenen Dokumentation notwendigen Medienumsetzung, z. B. durch Umsetzung von Sprache in Textform durch ein entsprechendes Modul (voice-to-text), automatisch gesichert.

Die gesicherte Protokollierung erfolgt insbesondere unter Verwendung von durch Signaturen, Schlüsseln und/ oder Wasserzeichen gesicherte digitale Dokumente, beispielsweise in Form von Portablen Dokumenten Formaten (PDF), welche zweckmäßiger Weise durch Beteiligte nach entsprechender Authentifikation einsehbar, abrufbar und/ oder auf andere Medien übertragbar, z.B. ausdruckbar sind.

Die Erfindung wird nachfolgend anhand einiger bevorzugter, jedoch beispielhafter Ausführungsformen exemplarisch unter Bezugnahme auf die beigefügten Zeichnungen näher beschrieben.

In den Zeichnungen zeigen:

Fig. 1     eine schematische Prinzipskizze von bei dem erfindungsgemäßen Computer basierten eingebundenen Kommunikationsmedien,

Fig. 2     eine schematische Prinzipskizze betreffend den Funktionalitäten eines erfindungsgemäß entsprechend angepassten Kommunikationsportals,

Fig. 3     ein Flussdiagramm, in dem der Ablauf eines beispielhaften erfindungsgemäßen Verfahrens für eine Programmablaufsteuerung dargestellt ist, und

Fig. 4     ein stark vereinfachtes Zeit-Aktions-Strukturdiagramm zur zeitlichen Darstellung von möglichen Geschäftsabwicklungsvorgängen unter Verwendung des erfindungsgemäßen Portalsystems.

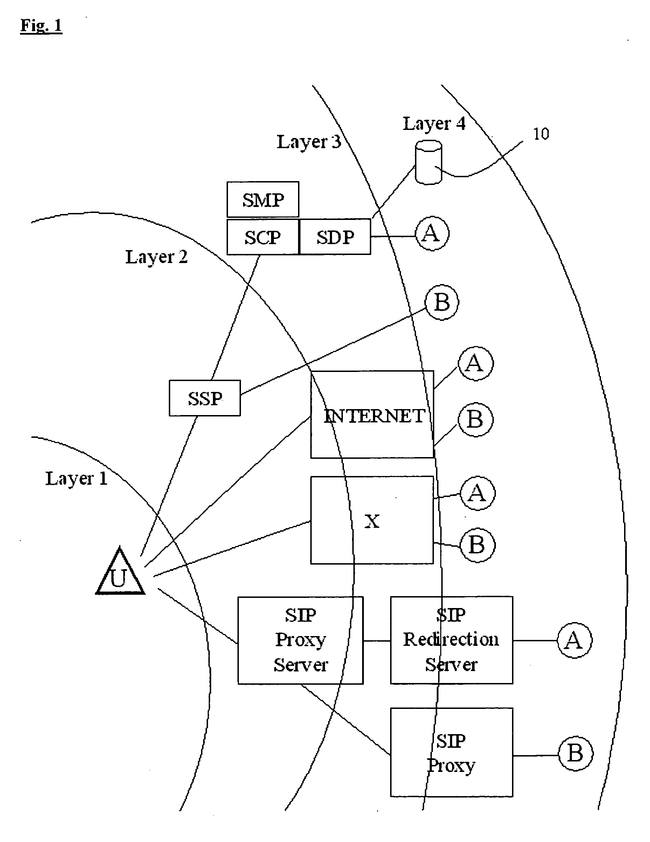

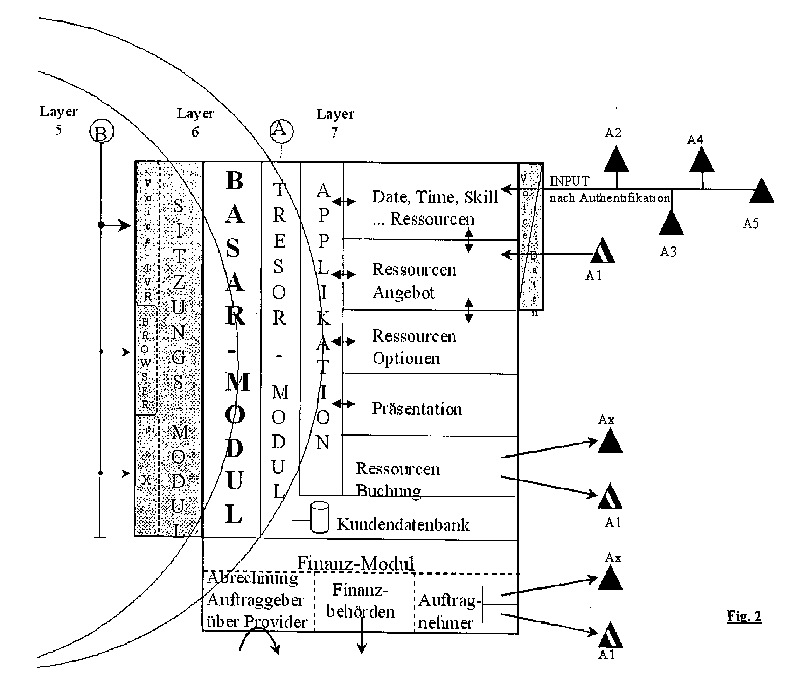

Unter Anlehnung an ein an sich bekanntes und nicht näher beschriebenes Siebenschichten-Modell (Layer 1 bis Layer 7) ist zunächst bei Fig. 1 eine Auswahl von möglichen an das erfindungsgemäße System durch entsprechende Schnittstellen eingebundenen Kommunikationsmedien und bei Fig. 2 von erfindungsgemäß zusammenwirkenden Funktionsvorrichtungen bzw. -modulen eines entsprechend angepassten Kommunikationsportals vereinfacht dargestellt.

Greift ein Nutzer über einen Kommunikationskanal auf das erfindungsgemäße Kommunikationsportal zu, wird bevorzugt über sichere Zugangswege zunächst eine Identifikation des Nutzers und/oder der verwendeten Kommunikationsendeinrichtung durchgeführt.

Jedes Mal, wenn z.B. ein bei Fig. 1 mit U gekennzeichneter Benutzer mit einer Kommunikationsendeinrichtung Kontakt über ein ausgewähltes Kommunikationsmedium zu dem erfindungsgemäßen Kommunikationsportal aufbaut, wird somit zunächst der Verbindungsaufbau über einen sicheren Zugangsweg, bei den Figuren 1 und 2 mit einem umkreisten A gekennzeichnet, zu einem Sicherungs- oder gemäß Figur 2 zu einem Tresormodul des Kommunikationsportals aufgebaut, wobei ein Authentifikationsinput erfassbar ist, die als dem Benutzer zugeordnete Daten in dem Tresormodul z.B. in einer dem Tresormodul zugeordneten Kundendatenbank gesichert gespeichert werden. Der Verbindungsaufbau über einen sicheren Zugangsweg erfolgt hierbei je nach ausgewähltem und/oder anwendungsspezifisch vermittelndem Kommunikationsmedium.

Beispielsweise unter Verwendung eines intelligenten Netzes unter Einbindung wenigstens eines Dienstvermittlungsknotens (SSP - Service Switching Point), Dienststeuerungsknotens (SCP - Service Control Point), Dienstverwaltungsknoten (SMP - Service Management Point) und Dienstdatenknotens (SDP - Service Data Points), wobei der letztere insbesondere auch als Schnittstelle zu externen Datenbanken 10 zur Erweiterung des intelligenten Netzes einsetzbar ist. Eine Verbindung über einen sicheren Zugangsweg kann jedoch insbesondere auch unter Nutzung des Internets und/oder mittels einer Sitzungseinleitenden Protokoll-Technologie (SIP - Session Initiation Protokoll) z.B. auch unter Verwendung von sogenannten Proxy-Servern und Redirection-Servern und/oder unter Nutzung von anderen, einschließlich erst zukünftigen, bei Fig. 1 mit X gekennzeichneten Kommunikationstechnologien aufgebaut werden.

Bei allen nachfolgenden, im Verlauf einer Geschäftsabwicklung durchzuführenden oder durchgeführten Aktionen und/oder Vorgänge ist somit eine Zuordnung zu dem Benutzer gewährleistet und sämtliche Aktionen und/oder Vorgänge werden entsprechend zugeordnet durch das Tresormodul gesichert protokolliert. Ein solches Tresormodul kann z.B. auch ein Trust-Center beinhalten oder einem solchen zugeordnet sein, welches alle Kommunikationsdaten, Geschäftsdaten, Zeitablaufdaten etc. derart sichert, dass diese weder von Seiten des Kunden, des Dienstanbieters und des Trust-Center-Providers manipulierbar sind. In Folge einer somit quasi "notariellen Beurkundung eines Vorgangs" wird jede Änderung und/oder Korrektur offensichtlich und ist für alle Beteiligte sofort erkennbar.

Zur Durchführung von Aktionen und/oder Vorgänge wird über einen Kommunikationskanal, bei Fig. 1 durch entsprechende Verbindungen zu den mit einem umkreisten B gekennzeichneten Punkten dargestellt, bevorzugt unter Aufbau einer Daten- und/oder Sprachverbindung und/oder bei Einbindung des Internets über einen Browser, dem Benutzer der Zugriff auf das Kommunikationsportal, gemäß Fig. 2 zu einem Sitzungsmodul des Kommunikationsportals bereitgestellt. Das Sitzungsmodul kann ferner mit interaktiven Kommunikationssystemmodulen zusammenwirken, z. B. einem Dialogorientierten Sprachsystem (IVR - Interactive Voice Response), insbesondere zur Entlastung von Routine-Aufgaben und zur Warteschlangenverwaltung sowie zur Verwendung von sprachgeführten Menüs.

Eine Präsentation von auswählbaren und/oder zusammenstellbaren Diensten wird von einem bei Fig. 2 als Applikationsmodul bezeichneten Einheit durchgeführt und kann anwendungs- oder applikationsspezifisch ausgebildet sein. Als Basis dienen hierzu von Dienstanbietern, bei Fig. 2 mit A1 bis A5 gekennzeichnet, eingegebene Parameter, die die Dienste insbesondere in Bezug auf das jeweilige Angebot und/oder benötigte Ressourcen oder weitere Rahmenbedingungen näher spezifizieren. Die Eingabe erfolgt auch hierbei vorzugsweise interaktiv über jeweilige Sprach- und/oder Daten übertragende Kommunikationsmedien und beinhaltet eine Authentifikation anhand gespeicherter, Dienst bezogener Parameter bzw. Daten, welche zweckmäßigerweise auch ein gespeichertes Profil in Bezug auf den jeweiligen Dienstanbieter umfassen, welches insbesondere auch die Netzkennung wenigstens eines von durch den Dienstanbieter angegebenen und/oder verwendeten Kommunikationssystems oder -endeinrichtung beinhaltet. Liegen noch keine gespeicherten Daten vor, wird in Folge einer Authentifikation zunächst ein derartiger Datensatz generiert.

Es sei darauf hingewiesen, dass bei Verwendung eines Sprache übertragenen Kommunikationsmediums zur Authentifikation auch Sprach- und/oder Sprecherverifizierungs- (voice verification) und/oder -erkennungsalgorithmus einsetzbar sind, so dass hierüber ein Nutzer über dessen Sprache verifizierbar ist, z.B. als bei einem Dienst registriert, und/oder erkennbar ist, z.B. aus einer Gruppe von Personen heraus. Entsprechend sind je nach verwendetem Kommunikationsmedium auch Bilddaten basierte Verifizierungs-/erkennungstechnologien und/oder weitere, z.B. biometrische, gegebenenfalls auch erst zukünftig bereitgestellte Verifizierungstechnologien einbindbar.

Sind beispielsweise durch entsprechende Eingabe des Dienstanbieters A1 weitere Ressourcen für den von A1 angebotenen Dienst notwendig und werden diese oder andere weitere (Dienst)Ressourcen durch entsprechende weitere Dienstanbieter A2 bis A5 nach Authentifikation eingegeben, wobei auch hier wiederum notwendige Rahmenbedingungen, beispielsweise hinsichtlich eines bestimmten Termins, zeitlichen Vorgaben oder besondere Fähigkeiten definierbar sind, verknüpft das Applikationsmodul basierend auf den gespeicherten Parametern die jeweiligen Dienste und erstellt eine optimale Präsentation von unterschiedlichen Diensten oder Dienstpaketen, jeweils mit den aktuellen Ressourcen und Vorgaben.

Betreibt der Anbieter A1 beispielsweise ein Tonstudio und möchte über das Kommunikationsportal den Verkauf von sogenannten Voice-Files für Anrufbeantworter und ähnliches anbieten, umfassen die zur optimalen Präsentation des Dienstes diesem Dienst zuordenbaren Parameter beispielsweise auch Grund-Parameter, wie auswählbare Titel, Musik und Angaben über den Preis pro aufzunehmende Länge. Stellt der Anbieters A1 ferner das Angebot ein, dass das Tonstudio hierfür auch gemietet werden kann und sind unter den weiteren Dienstanbietern A2 bis A5 beispielsweise welche, die ihre Gesangs- und/oder Sprechqualitäten über das Kommunikationsportal anbieten und zusätzlich deren Verfügbarkeit, Tonlagen, Honorare und gegebenenfalls auch Audio und/oder visuelle Aufnahmen zur Angebotspräsentation über das Kommunikationsportal bereitstellen, verknüpft das Applikationsmodul daraufhin basierend auf den durch die Dienstanbieter A1 bis A5 eingegebenen Dienst bezogenen, gespeicherten Parametern einander ergänzende Dienste und erstellt eine optimale Präsentation für den Verkauf von Voice-Files auch unter Angabe der möglichen auswählbaren Sprecher.

Über das Sitzungsmodul und je nach verwendetem Kommunikationskanal mittels der möglichen interaktiven Dialogwege, wie beispielsweise Browser, interaktives Dialogsystem, Sprache, SMS usw. gelangt der als Kunde auftretende Benutzer gemäß Fig. 2 zum Basarmodul des Kommunikationsportals und kann nun seinen gewünschten Dienst aussuchen bzw. anfragen und/oder individuelle Vorgaben eingeben, über Preis und Leistungen verhandeln, wie nachfolgend näher beschrieben. Alle hierbei notwendigen Vorgänge werden wiederum im Tresormodul gesichert gespeichert.

Wünscht beim vorliegenden Beispiel also ein Benutzer ein auf Ihn zugeschnittenes individuelles Voice-File, welches z.B. Termingerecht erstellt und ein maximales Entgeld nicht übersteigen soll, wirken das Basarmodul und das Applikationsmodul derart zusammen, dass unter Verknüpfung dieser Anfrage bzw. individuellen Vorgaben automatisch ein individuelles Dienstangebot für den Benutzer aus der Vielzahl der über das Kommunikationsportal präsentierten Voice-Files betreffenden Dienste erstellt wird. Ferner werden erfasste Benutzerbezogene Parameter hierzu herangezogen, im vorliegenden Fall z.B., wenn ein gewünschtes Voice-File nur per Postweg zugestellt werden kann, da lediglich eine Sprachverbindung von dem Benutzer aus aktivierbar ist, dieses jedoch Termingerecht erfolgen soll.

Nach positiver Geschäftsabwicklung, d.h. ein Nutzer hat einen über das Kommunikationsportal für ihn erstelltes individuelles Dienstangebot angenommen, erfolgt ein Dienstbuchungstransfer zu den zur Durchführung des Dienstes benötigten Beteiligten und/oder Ressourcen. Im vorliegenden Fall werden somit basierend auf den in den Dienstanbieterprofilen gespeicherten Netzkennungen über die jeweiligen Kommunikationssysteme und/oder -endeinrichtungen einem "gebuchten" Sprechers A2 bis A5 beispielsweise die Aufnahmezeit in dem bestimmten Tonstudio mitgeteilt und dem Besitzer A1 des zur Erfüllung des ausgewählten Dienstangebotes benötigten Tonstudios diese Ressourcenbuchung in entsprechender Weise mitgeteilt.

Applikationsspezifisch ist bevorzugt vorgesehen, unmittelbar im Anschluss oder zu einem vorgegebenen/ vorgebbaren Termin automatisch die finanztechnischen Buchungstransfers mit allen von einem jeweils abgewickelten Geschäft betroffenen Beteiligten wiederum über jeweils zugeordnete und über entsprechende Kommunikationsmedien eingebundene Kommunikationssystem einzuleiten bzw. auch vollständig durchzuführen. Dies betrifft insbesondere Abrechnungen eines Auftraggebers gegenüber einem Provider, also im vorliegenden Fall beispielsweise des Dienstanbieters gegenüber dem das Kommunikationsportal zur Dienstpräsentation und Geschäftsabwicklung bereitstellenden Provider, aber auch den finanztechnischen Buchungstransfer zu Auftragnehmern, also im vorliegenden Fall zu den beauftragten Dienstanbietern und zu zuordenbaren Finanzbehörden. Mit anderen Worten wird beispielsweise nach bestätigender Eingabe einer Kreditkartennummer durch den Nutzer des erfindungsgemäßen Kommunikationsportals automatisiert ein Datentransfer zur Verbuchung der Entgeltung des Dienstes bei einem dem Nutzer zugeordneten Konto, zur Aufsplittung der enthaltenden Dienstnebenkosten und durch Transfer entsprechender finanztechnischer Kommunikationsprotokolle zur Umbuchung bzw. Gutschrift bei den entsprechend Beteiligten, wie beispielsweise dem vorerwähnten Provider sowie der vorerwähnten Finanzbehörde, eingeleitet und/oder durchgeführt.

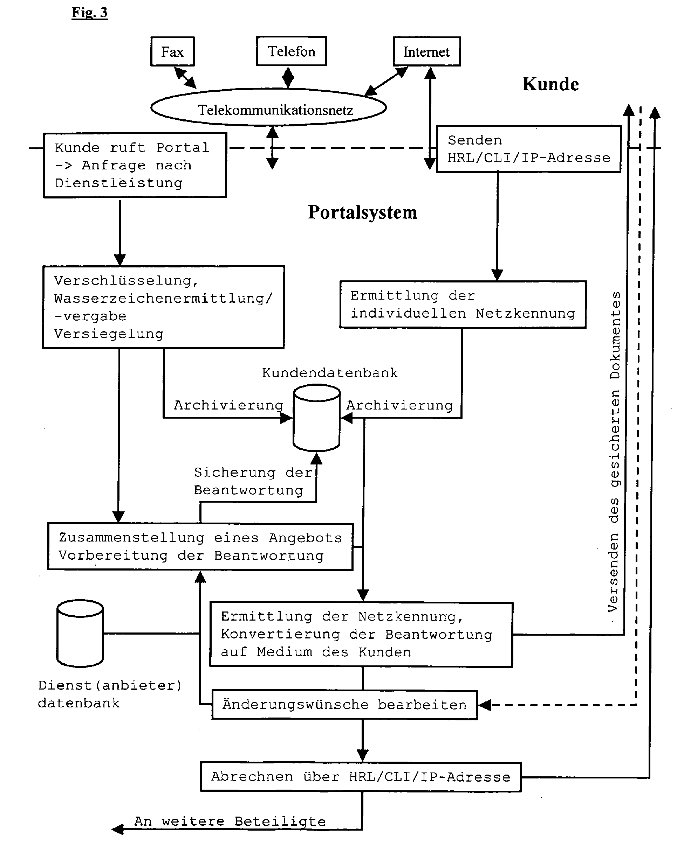

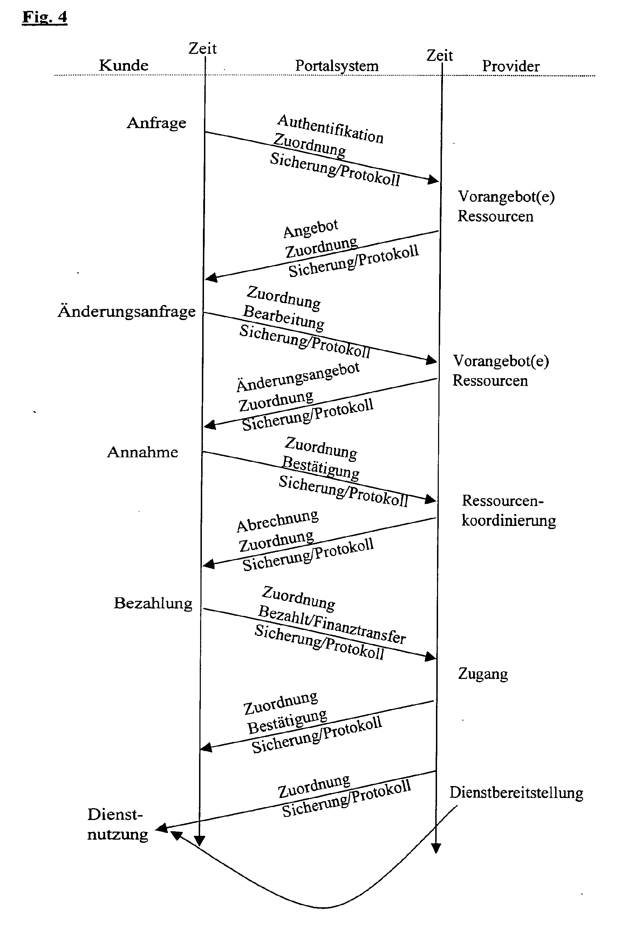

Einige weitere bevorzugte, durch das vorstehend aufgezeigte Kommunikations-Portalsystem technisch und kostengünstig durchführbare automatisierte Abläufe/Vorgänge zur erfindungsgemäß gesicherten Geschäftsabwicklung werden nachfolgend beispielhaft insbesondere auch unter Verweis auf das Flussdiagramm gemäß Figur 3, welche einen beispielhaften Ablauf einer erfindungsgemäßen Geschäftsabwicklung schematisch für die Implementierung einer Programmablaufsteuerung skizziert, sowie unter Verweis auf Figur 4, welche stark vereinfacht mögliche Geschäftsabwicklungsvorgänge unter Verwendung des erfindungsgemäßen Portalsystems zeitlich innerhalb eines Zeit-Aktions-Strukturdiagramm aufzeigt, kurz dargestellt.

Entsprechend wird durch das Portalsystem ein individueller Auftrag vom Erstkontakt, der Kommunikation einschließlich Kunden basierter Änderungswünsche, der Auftrag und die Ergebnisse abgewickelt. Beim Durchschreiten des Systems wird die Kommunikation, insbesondere in Form von digital speicherbaren Dokumenten für die weitere Bearbeitung konserviert, geschützt. Die Zuordnung erfolgt automatisiert durch die eindeutige individuelle Netzkennung (en) der Kunden und Auftragnehmer, also im Wesentlichen Dienstanbieter, bzw. jeweils zugeordneten Kommunikationssystemen und/oder -endeinrichtungen, wobei technisch vorhandene Kommunikationsstrukturen, wie z.B. das Intelligente Netz und/oder Browsertechnologien verwendbar sind.

In einem ersten Schritt der Anfrage, gegebenenfalls auch unter einer 0190 Zugangs-Rufnummer, damit nur interessierte Kunden anfragen, überträgt ein Kunde über das Portal eine modale Anfrage, so dass z.B. gilt:

$$\text{Anfrage} = f(\text{Schrift, Bild, Ton}).$$

In einem zweiten Schritt des individuellen Angebots, stellt das Portalsystem anhand der Anfrage und wenigstens eines Vorangebots zumindest eines Dienstanbieters ein Angebot. Erfindungsgemäß beinhaltet dabei das Angebot unlöschbar die Anfrage, dass also allgemein gilt:

$$\text{Angebot} = f(\text{Vorangebot, Anfrage}).$$

Hierbei kann erfindungsgemäß über das Portalsystem anwendungsspezifisch auch eine vorgefertigte Antwort, wie z.B. eine Antwort-Mail und/oder Angebots-Erstellung-Mail bereitgestellt werden, in welcher die Anfrage unveränderbar, integriert wird.

In einem solchen Fall wird zweckmäßiger Weise eine kundenseitige Absendermail- als Empfängermail umgewidmet. Wünscht der Kunde dahingegen eine telefonische Beantwortung, so kann das Portal nach Aufbau der Telefonverbindung das vorbereitete Beantwortungsmail, also das individuelle Angebot, insbesondere mittels Sprachverarbeitungssystemen vorlesen oder automatisiert die Information ausdrucken und eine briefliche Versendung einleiten.

In einem nächsten Schritt der Annahme, kann der Kunde seine Annahme des Angebots übermitteln, zweckmäßiger Weise, indem das Angebot unverändert an das Portalsystem zurückleitet, mit dem unveränderlichen Hinweis, das der Auftrag erteilt ist, wobei somit

$$\text{Annahme} = f(\text{Annahme, Angebot, Anfrage})$$

gilt und zum nächsten Schritt gelangt.

Sofern es hierbei der Schriftform bedarf oder erwünscht wird, können die Dokumente gleichermaßen ausgedrückt und als Brief versandt werden.

Der Kunde kann jedoch das Angebot auch nicht annehmen. Z.B., indem das Angebot unveränderbar an das Portalsystem zurückgeleitet wird, jedoch mit dem unveränderlichen Hinweis, das der Auftrag nicht erteilt ist oder einen Anhang durch den Kunden, gemäß:

$$\text{Anfrage}_n = f(\text{Anfrageänderung, Angebot}_{n-1}, \text{Anfrage}_{n-1})$$

erhält, der daraufhin wieder zum zweiten Schritt geleitet wird.

In einem nächsten Schritt der Abrechnung, stellt das Portalsystem den Dienst zusammen und überträgt dieses verknüpft mit dem Angebot zusammen mit der Abrechnung der Leistung zum Kunden. Hierbei ist das Angebot nicht mehr veränderbar und die

$$\text{Abrechnung} = f(\text{Dienst, Angebot}_n \text{ mit Anfrage}_n).$$

Das Bezahlen kann jedoch ebenso in den vorherigen Schritten erfolgen, je nach vorliegenden Abwicklungsmodalitäten bezogener Parameter, wobei allgemein gilt:

$$\text{Bezahlt} = f(\text{Beleg der Bezahlung, Dienst, Angebot}_n \text{ mit}$$

$$\text{Anfrage}_n)$$

Über das erfindungsgemäße Kommunikationssystem wird der Auftrag ferner komplett archiviert, verteilt und zugearbeitet, wobei es gemäß vorstehender Beschreibung unerheblich ist, ob der von Kundenseite her zugreifende Benutzer über Telefon, Internet, per Mai oder in Briefform arbeitet. Das Portal bindet über entsprechend angepasste Schnittstellen erfindungsgemäß unterschiedliche Zugangsmedien ein, die innerhalb des Portals auf einen Standard, z.B. in die Form Text oder Bild, normiert werden. So wird z.B. bevorzugt Sprache vom Telefon in ein sogenanntes Wave-File konvertiert und ein FAX oder ein Bild in eine Bild-Form konvertiert, wobei beim Durchschreiten des Portal, im Wesentlichen sämtliche hierbei erzeugte digitale Dokumente eingefroren werden.

Jedes Gespräch über Telefon zum Kommunikationsportal wird somit dokumentiert und sofort eingefroren, also gesichert, zweckmäßigerweise verschlüsselt mit Schlüssel und Wasserzeichen, Zeitstempel als $DOKUMENT_x$ gespeichert und protokolliert, z.B. durch eine PDF-Datei mit Schlüssel und Wasserzeichen, welches über das Portalsystem für alle bei der Geschäftsabwicklung Beteiligte als unveränderbares $DOKUMENT_x$ in einer Datenbank verwaltet wird.

Bei einer schriftlichen oder mündlichen Beantwortung der Anfrage über das Portalsystem, wird das $DOKUMENT_x$ an die Beantwortung angehängt, sobald die applikationsspezifische Beantwortungsprozedur durch das Portal durchlaufen wird. Wenn das $DOKUMENT_x$ beim Angebot schon vorliegt z.B. als ADD-Element bei einer Mail, wird es nicht mehr hinzugetan. Somit erhält der Kundenseitige Benutzer über dessen Kommunikationsmedium ein $DOKUMENT_y$, welches er annehmen oder ablehnen kann usw.

Durch Bereitstellung einer automatisierten Dokumentationsnummer und/oder Kennung des Kunden wird eine manipulationssichere Automatisierung der Zuordnung des Kunden zu einem Auftrag wirksam gewährleistet und Unmengen unterschiedlicher auflaufender Kundenschritte können protokolliert verarbeitet werden.

Eine solche gesicherte Protokollierung umfasst somit bevorzugt Parameter, wie:

<Kennung-Kunde> <Datum> <Uhrzeit> <Kennung-Auftragnehmer> <Phase der Geschäftsabwicklung> <Kommunikationssystem-Kennzeichen>.

Der Parameter <Kennung-Kunde> umfasst insbesondere Name, Anschrift und/oder eine oder mehrer Netzkennungen, oder Teile hiervon, von verwendeten Kunden-bezogenen Kommunikationsendeinrichtungen, also z.B. die CLI, IP-Adesse und/oder HLR-Daten. Entsprechendes gilt für den Parameter <Kennung-Auftragnehmer>.

Bereits durch eine eindeutige Netzkennung kann somit schnell jeder Zugriff, z.B. ein Anruf, einem Dienst, Auftrag, einer Kundenbeziehung oder einer Gruppe von Diensten, Anfragen und/oder Aufträgen automatisch zugeordnet werden.

Die Parameter <Datum, Uhrzeit> umfassen zweckmäßigerweise einen Zeitstempel und/oder ein elektronisches Zeitzertifikat.

Der Parameter <Phase der Geschäftsabwicklung> identifiziert z.B. gemäß vorstehender Beschreibung, in welchem Schritt sich eine Auftragsabwicklung befindet.

Der Parameter <Kommunikationssystem-Kennzeichen> identifiziert z.B. die jeweilige Art und/oder Funktion eines genutzten modalen Kommunikationssystems, also ob es sich um eine Browser-, Voice-over-Internet, Fax-, Telefonbasierte Übertragung etc. handelt.

Für einen Fachmann ist nach Würdigung vorstehender Beschreibung erkennbar, dass das erfindungsgemäße Portalsystem folglich bei anwendungsspezifischer Modifikation auch als eine Art Vermittler fungieren kann, z.B. für eine Handwerkskammer, Industriekammer, Notarkammer oder direkt als Provider auftreten kann.

Bei einem bevorzugt abzuwickelnden Dienst handelt es sich insbesondere um einen Content, also ein Inhalt der über Telekommunikationsnetze vermittelt werden kann. Selbstverständlich kann, wie z.B. bei Fig. 4 durch den gekrümmten Pfeil angezeigt, statt des Contents auch eine Ware mit anderen Medien, Brief, Versandt, Schiff transportiert werden oder die Beauftragung der Durchführung einer Dienstleistung, auch einer Vorortdurchführung beim Kunden abgewickelt werden. Dabei wirkt das Portalsystem somit insbesondere ähnlich einem ausgelagerten Auftragsabwicklunqssystem, einem ausgelagerten Buchführungsprogramm, oder einer ASP-Anwendung.

Gleichzeitig kann vom Portalsystem, insbesondere, wenn es als Vermittler fungiert, ein Log-File geführt werden, z.B. für die vorstehend erwähnte Handelskammer und/oder Handwerkerkammer und/oder eine Buchführung für den Auftragnehmer geführt werden, da das System ebenso eine Rechnung schreiben kann und den Weg des Geldflusses einleitet, durchführt und/oder verfolgt.

In Folge gewährleistet das erfindungsgemäße Portalsystem folglich eine automatische Archivierung für Dritte, welches für eine Vielzahl von Dienstleistungszweigen wirksam einsetzbar ist. Basierend auf der auf kommunikationstechnischen Zugangstechniken Optimierte Lösung ist das erfindungsgemäße Portalsystem neben der Auftragsabwicklung und/oder Buchführung für Selbststände und/oder Kleinstunternehmer auch bei finanztechnischen Transfer einsetzbar.

Die integrationsintegrierte Geschäftsabwicklung (Sprache, Text, Bild sind Integriert und abrufbar) erfolgt in der Dokumentation ohne Medienbruch, wobei jeder Schritt im Geschäftsprozess eingefroren und nicht mehr manipulierbar ist. Die Zusammenfassung unterschiedlicher Medien (Text, Ton, Bild) und modaler Verträge im Gegensatz zu schriftlichen Verträgen führt zur Kosteneinsparung sowohl beim Unternehmer als auch beim Kunden, wobei die Kosten applikationsspezifisch verteilbar sind. Unter Nutzung unterschiedlicher integrierter Zugangsmedien gewährleistet die erfindungsgemäße Gewährleistung einer gesicherten Vertragsabwicklung sowie eines automatisch generierten Dokumentationsmediums über den gesamten Geschäftsprozess somit sowohl auf Seiten der Auftraggebers als auch der Auftragnehmer einen festen und insbesondere auch rechtlich wirksamen Nachweis.

Für einen Fachmann ist es ferner ersichtlich, dass die Erfindung auch Ausführungsformen umfasst, bei welchen das erfindungsgemäße Portalsystem eine Vielzahl von Kommunikationsportalen einbindet. So kann z.B. ein jeweiliger Zeitstempel, eine Uhrzeit und/oder das Datum von einem Zeit-(Trust-Center-)Portal bereitgestellt werden und/oder die Authentifizierungsprozedur und/oder das Versehen mit digitalen Unterschriften von einem weiteren Sicherheits-(Trust-Center-)Portal durchgeführt werden, wobei Daten auch Länder übergreifend kommunizierbar sind und/oder auf unterschiedlichen Servern auch in verschiedenen Ländern abgerufen, gesichert und/oder bereitgestellt werden.

**Patentansprüche**

1. Computer basiertes Verfahren zur automatisierten Geschäftsabwicklung unter Verwendung wenigstens eines multifunktionalen Kommunikationsportals, auf welches über wenigstens ein frei wählbares Kommunikationsmedium zugegriffen werden kann, und welches mit wenigstens einer Datenbank zum Speichern einer Vielzahl von über das Kommunikationsportal präsentierbaren Diensten zuordenbaren Parametern

2. zusammenwirkt, wobei das Verfahren die Schritte umfasst, dass

   unter Ansprechen auf eine durch einen Benutzer über ein Kommunikationsmedium an das Kommunikationsportal übermittelte Dienstanfrage Benutzerbezogene Parameter erfasst werden und unter Verknüpfung der Dienstanfrage und erfasster Benutzerbezogener Parameter automatisch wenigstens ein individuelles Dienstangebot aus der Vielzahl der über das Kommunikationsportal präsentierbaren Diensten zuordenbaren Parametern für den Benutzer zur Annahme erstellt,

   wobei bis zur vollständigen Beendigung einer Geschäftsabwicklung alle notwendigen Vorgänge gesichert protokolliert werden.

3. Verfahren nach Anspruch 1, ferner **dadurch gekennzeichnet, dass** bei Annahme eines individuell erstellten Dienstangebots durch einen Benutzer automatisch ein finanztechnischer Buchungstransfer mit vorgegebenen Kommunikationssystemen und/oder -endeinrichtungen aller durch die Geschäftsabwicklung betroffenen Beteiligten eingeleitet und/oder durchgeführt wird.

4. Verfahren nach einem der vorstehenden Ansprüche, ferner **dadurch gekennzeichnet, dass** bei Annahme eines individuell erstellten Dienstangebots durch einen Benutzer automatisch ein Annahmebestätigungstranfer und/oder Dienstbuchungstranfer über vorgegebene Kommunikationssysteme und/oder -endeinrichtungen aller bei der Abwicklung des Dienstes notwendigen Ressourcen eingeleitet und/oder durchgeführt wird.

5. Verfahren nach einem der vorstehenden Ansprüche, ferner **gekennzeichnet dadurch, dass** bei jedem Zugriff auf das Kommunikationsportal eine Authentifikation des Zugreifenden durchgeführt wird.

6. Verfahren nach einem der vorstehenden Ansprüche, ferner **gekennzeichnet dadurch, dass** das Erstellen eines individuellen Dienstangebotes eine Verknüpfung von einer Vielzahl von Diensten basierend auf den den jeweiligen Diensten zuordenbaren Parametern beinhaltet.

7. Verfahren nach einem der vorstehenden Ansprüche, ferner **gekennzeichnet dadurch, dass** die für eine Geschäftsabwicklung notwendigen Vorgänge unter Verwendung einer Vielzahl von Kommunikationsmedien erfolgt.

8. Verfahren nach einem der vorstehenden Ansprüche, ferner **gekennzeichnet dadurch, dass** ein jeweils erstelltes Dienstangebot und/oder notwendige Vorgänge zur Geschäftsabwicklung unter Ansprechen auf das jeweils vom Benutzer aktuell verwendete Kommunikationsmedium zur Bereitstellung für den Benutzer entsprechend konvertiert wird.

9. Verfahren nach einem der vorstehenden Ansprüche, ferner **gekennzeichnet dadurch, dass** zur Zuordnung aller durch die Geschäftsabwicklung betroffenen Beteiligten und/oder aller bei der Abwicklung des Dienstes notwendigen Ressourcen jeweils eindeutige, individuelle Netzkennungen der vorgegebenen und/oder beim Zugriff auf das Kommunikationsportal eingesetzten Kommmunikationssysteme und/oder -endeinrichtungen als Parameter ermittelt, gespeichert und/oder gesichert protokolliert wird.

10. Verfahren nach vorstehendem Anspruch, ferner **gekennzeichnet dadurch, dass** die Ermittlung einer Netzkennung durch Erfassung von jeweiligen CLI-Daten, IP-Adressdaten und/oder HLR-Daten erfolgt, welche bei Zugriff eines Kommunikationssystem und/oder einer - endeinrichtung auf das Kommunikationsportal zur Zuordnung und/ oder Authentifikation übertragen und/oder unter Einbindung einer externen Datenbank abgefragt werden.

**11.** Verfahren nach einem der vorstehenden Ansprüche, ferner **gekennzeichnet dadurch, dass** unter Ansprechen auf eine Änderungsanfrage durch einen Benutzer in Bezug auf ein erstelltes Dienstangebot eine Anpassung des Dienstangebotes durch erneuten Abgleich und entsprechender Verknüpfung gespeicherter Parameter eingeleitet wird.

**12.** Verfahren nach einem der vorstehenden Ansprüche, ferner **gekennzeichnet dadurch, dass** die Anpassung eines Dienstangebotes in Abhängigkeit der über das Kommunikationsportal präsentierbaren Diensten zuordenbaren Parametern erfolgt.

**13.** Computer basiertes System zur automatisierten Geschäftsabwicklung unter Bereitstellung wenigstens eines multifunktionalen Kommunikationsportals, welches über wenigstens ein frei wählbares Kommunikationsmedium zugreifbar ist, und welches mit wenigstens einer Datenbank zum Speichern einer Vielzahl von über das Kommunikationsportal präsentierbaren Diensten zuordenbaren Parametern zusammenwirkt, wobei das System umfasst,
eine Vorrichtung, zum Empfangen von durch einen Benutzer über ein Kommunikationsmedium an das Kommunikationsportal übermittelten Dienstanfragen,
eine Vorrichtung, die mit der Empfangseinrichtung zum Erfassen von Benutzerbezogenen zusammenwirkt,
eine Vorrichtung, die durch Zusammenwirken mit der Datenbank, der Empfangsvorrichtung und der Vorrichtung zur Erfassung durch Verknüpfung der Dienstanfrage, Benutzerbezogener Parameter und gespeicherter über das Kommunikationsportal präsentierbaren Diensten zuordenbaren Parametern die automatische Erstellung eines individuelles Dienstangebotes vornimmt, und
eine Vorrichtung zur gesicherten Protokollierung aller notwendigen Vorgänge bis zur vollständigen Beendigung einer Geschäftsabwicklung.

**14.** Computer basiertes System nach einem der vorstehenden Ansprüche, ferner **gekennzeichnet durch** eine Vorrichtung die unter Ansprechen auf eine über ein Kommunikationsmedium an das Kommunikationsportal übermittelte Annahme eines individuell erstellten Dienstangebots **durch** einen Benutzer einen finanztechnischen Buchungstransfer mit vorgegebenen Kommunikationssystemen aller **durch** die Geschäftsabwicklung betroffenen Betbeteiligten einleitet und/oder durchführt.

**15.** Computerbasiertes System nach einem der vorstehenden Ansprüche, ferner **gekennzeichnet durch** eine Vorrichtung die unter Ansprechen auf eine über ein Kommunikationsmedium an das Kommunikationsportal übermittelte Annahme eines individuell erstellten Dienstangebots **durch** einen Benutzer einen Annahmebestätigungstranfer und/oder Dienstbuchungstranfer mit vorgegebenen Kommunikationssystemen aller bei der Abwicklung des Dienstes notwendigen Ressourcen einleitet und/oder durchführt.

**16.** Computerbasiertes System nach einem der vorstehenden Ansprüche, ferner **dadurch gekennzeichnet, dass** die von über das Kommunikationsportal präsentierbaren Diensten zuordenbaren Parametern Informationen über den Dienstanbieter, angebotene Fähigkeiten, benötige Ressourcen, Termin- und/oder Preisvorgaben und/oder - spannen, finanztechnische Informationen, insbesondere über Abrechnungsmodularitäten und/oder beteiligte Finanzbehörden, und/oder Netzkennungen vor, während und/oder nach einer Geschäftsabwicklung für einen Datentransfer einzubeziehende Kommunikationssysteme.

**17.** Computerbasiertes System nach einem der vorstehenden Ansprüche, ferner **gekennzeichnet, durch** eine Vorrichtung zur Verschlüsselung, wasserzeichenermittlung/-vergabe und/oder Versiegelung von zu sichernden Kommunikationen.

**18.** Computerbasiertes System nach vorstehendem Anspruch, ferner **gekennzeichnet, durch** eine Vorrichtung zur Archivierung der zu sichernden Kommunikationen, insbesondere unter Einbindung einer Vorrichtung zur Konvertierung der zu sichernden Kommunikationen in PDF-Dateien.

**Fig. 1**

Fig. 2

**Fig. 3**

```
        ┌─────┐      ┌─────────┐      ┌──────────┐
        │ Fax │      │ Telefon │      │ Internet │
        └─────┘      └─────────┘      └──────────┘
```

**Kunde**

```
        ╭─────────────────────────────────────╮
        │      Telekommunikationsnetz          │
        ╰─────────────────────────────────────╯
```

┌─────────────────────┐                    ┌─────────────────────┐
│ Kunde ruft Portal   │                    │ Senden              │
│ -> Anfrage nach     │                    │ HRL/CLI/IP-Adresse  │
│ Dienstleistung      │                    │                     │
└─────────────────────┘                    └─────────────────────┘

**Portalsystem**

┌──────────────────────────┐              ┌──────────────────────────┐
│ Verschlüsselung,         │              │ Ermittlung der           │
│ Wasserzeichenermittlung/ │              │ individuellen Netzkennung│
│ -vergabe                 │              └──────────────────────────┘
│ Versiegelung             │
└──────────────────────────┘

Kundendatenbank

Archivierung          ▭          Archivierung

Sicherung der
Beantwortung

┌────────────────────────────────┐
│ Zusammenstellung eines Angebots│
│ Vorbereitung der Beantwortung  │
└────────────────────────────────┘

┌──────────────────────────────────────┐
│ Ermittlung der Netzkennung,          │
│ Konvertierung der Beantwortung       │
│ auf Medium des Kunden                │
└──────────────────────────────────────┘

Dienst(anbieter)
datenbank

┌────────────────────────────────┐
│ Änderungswünsche bearbeiten    │
└────────────────────────────────┘

Versenden des gesicherten Dokumentes

┌────────────────────────────────────┐
│ Abrechnen über HRL/CLI/IP-Adresse  │
└────────────────────────────────────┘

An weitere Beteiligte

**Fig. 4**